(19) Europäisches Patentamt
European Patent Office
Office européen des brevets

(11) **EP 2 615 583 B1**

(12) **EUROPEAN PATENT SPECIFICATION**

(45) Date of publication and mention
of the grant of the patent:
**20.04.2016 Bulletin 2016/16**

(51) Int Cl.:
***G06T 17/00*** *(2006.01)*     ***G06T 7/00*** *(2006.01)*
*G06K 9/00* *(2006.01)*     *G06T 7/20* *(2006.01)*

(21) Application number: **12305040.3**

(22) Date of filing: **12.01.2012**

(54) **Method and arrangement for 3D model morphing**

Verfahren und Anordnung zum Morphing eines 3D- Modells

Procédé et agencement de morphage de modèles 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.07.2013 Bulletin 2013/29**

(73) Proprietor: **ALCATEL LUCENT**
**92100 Boulogne-Billancourt (FR)**

(72) Inventors:
• **Lievens, Sammy**
**2930 Brasschaat (BE)**
• **Tytgat, Donny**
**9860 Oosterzele (BE)**
• **Aerts, Maarten**
**9120 Beveren-Waas (BE)**
• **Six, Erwin**
**9270 Kalken (BE)**

(74) Representative: **ALU Antw Patent Attorneys**
**Intellectual Property and Standards**
**Copernicuslaan 50**
**2018 Antwerp (BE)**

(56) References cited:
**US-A1- 2007 091 085**     **US-A1- 2009 284 529**
**US-A1- 2010 214 288**     **US-B1- 6 492 986**

• **WANG T-H ET AL: "Facial expression recognition
system based on rigid and non-rigid motion
separation and 3D pose estimation", PATTERN
RECOGNITION, ELSEVIER, GB, vol. 42, no. 5, 1
May 2009 (2009-05-01), pages 962-977,
XP025875842, ISSN: 0031-3203, DOI:
10.1016/J.PATCOG.2008.09.035 [retrieved on
2008-10-21]**
• **KOCH R: "DYNAMIC 3-D SCENE ANALYSIS
THROUGH SYNTHESIS FEEDBACK CONTROL",
IEEE TRANSACTIONS ON PATTERN ANALYSIS
AND MACHINE INTELLIGENCE, IEEE SERVICE
CENTER, LOS ALAMITOS, CA, US, vol. 15, no. 6,
1 June 1993 (1993-06-01), pages 556-568,
XP000369960, ISSN: 0162-8828, DOI:
10.1109/34.216725**

## Description

The present invention relates to a method for three-dimensional model morphing.

At present, morphing of a model based on real dynamic scenes or even on images taken by cheap cameras can be a difficult problem. Three dimensional, which in the remainder of this document will be abbreviated by 3D, model artists may for instance spend a lot of time and effort to create highly detailed and life-like 3D content and 3D animations. However this is not desirable, and even not feasible in next-generation communication systems, were 3D visualizations of e.g. meeting participants have to be created on the fly.

US patent application US2007/0091085 shows systems and methods to perform automatic 3D face modeling. In one implementation, a brief video clip of a user's head turning from front to side provides enough input for automatically achieving a model that includes 2D feature matches, 3D head pose, 3D face shape, and facial textures. The video clip of the user may be of poor quality. In a two layer iterative method, the video clip is divided into segments. Flow-based feature estimation and model-based feature refinement are applied recursively to each segment. Then the feature estimation and refinement are iteratively applied across all the segments. The entire modeling method is automatic and the two layer iterative method provides speed and efficiency, especially when sparse bundle adjustment is applied to boost efficiency. It is therefore an object of embodiments of the present invention to present a method and an arrangement for image model morphing, which is able to generate high quality 3D image models based on two-dimensional, hereafter abbreviated by 2D, video scenes from even lower quality real life captions while at the same time providing a cheap, simple and automated solution.

According to embodiments of the present invention this object is achieved by a method for morphing a standard 3D model based on 2D image data input, as set out in claim 1.

This allows for a high-quality and yet time efficient method.

In another embodiment the morphing model used in said initial morphing step is updated based on the optical flow between the 2D image data input and the morphed standard 3D model. This will further increase the quality of the resulting model, and its correspondence with the input video object.

In another embodiment the detection model used in said initial morphing step, is updated as well, based on optical flow information determined between the between the 2D image frame and a previous 2D image frame.

This again adds to a more quick and more realistic shaping/morphing of the 3D standard model in correspondence with the input 2D images.

In yet another variant the step of applying the optical flow comprises an energy minimization procedure.

This may even further enhance the quality of the resulting fine tuned morphed model.

The present invention relates as well to embodiments of an arrangement for performing this method, for image or video processing devices incorporating such an arrangement and to a computer program product comprising software adapted to perform the aforementioned or claimed method steps, when executed on a data-processing apparatus.

As previously mentioned, during the whole of the text two-dimensional will be abbreviated by 2D, while three-dimensional will be abbreviated by 3D..

The above and other objects and features of the invention will become more apparent and the invention itself will be best understood by referring to the following description of an embodiment taken in conjunction with the accompanying drawings wherein:

Fig. 1 shows a first high level embodiment of the method,
Figs. 2 and 3 show more detailed embodiments of some modules of the embodiment depicted in Fig. 1,
Fig. 4 shows a high level schematic of another embodiment of the method,
Figs. 5 and 6 show further details of some modules of the embodiment depicted in Fig. 4,
Figs. 7-8 show two further detailed embodiments,
Fig. 9 shows another high level embodiment of the method,
Figs. 10-11 show two more detailed alternative embodiments.

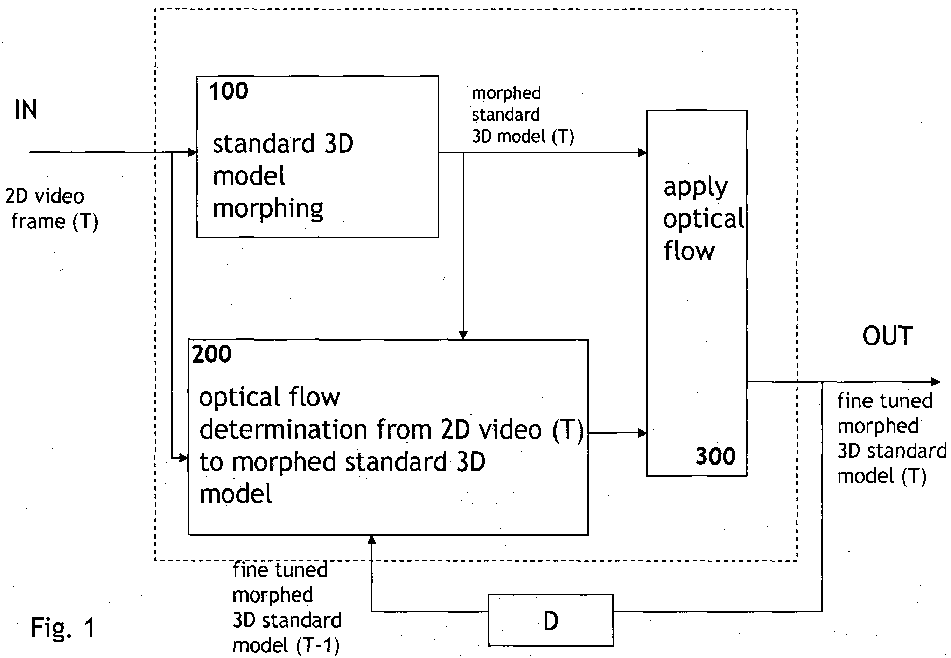

Fig. 1 shows a high-level scheme of a first embodiment of an arrangement and a corresponding method for generating a high quality real time 3D model from an input 2D video. The embodiment takes as input successive frames of a video sequence. In fig. 1 the steps are explained for being performed on a particular frame, being a 2D video frame at time T.

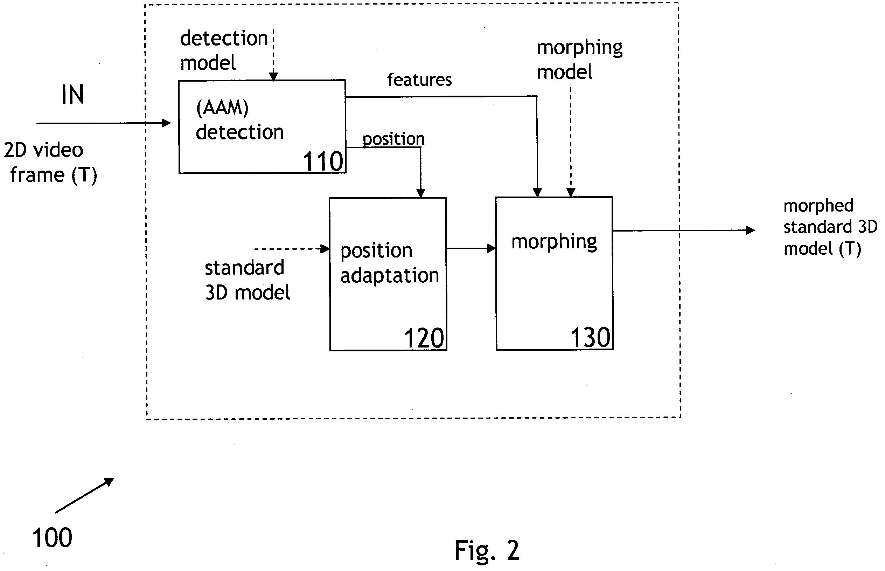

A first operation module 100 involves the morphing of an available, standard, 3D model which is selected or stored beforehand, e.g. in a memory. This standard 3D model is morphed in module 100 in accordance with the input 2D video frame at time T. Detailed embodiments for this morphing procedure will be described with reference to fig. 2. The output of module 100 is thus a morphed standard 3D model at time T.

Partly in parallel with the morphing step 100, the optical flow is determined from the 2D video frame at time T towards the morphed standard 3D model at time T. This takes place in module 200 which has as input the 2D video frame at time T, the morphed standard 3D model, as provided by module 100, and the output of the arrangement, determined in a previous time step. This previously determined output concerns the fine tuned morphed 3D standard model, determined at a previous time step, in the embodiment depicted in Fig. 1 being time T-1, and which is provided via a feedback connection from the output of the arrangement to this module 200. In figure 1 the feedback loop is depicted as incorporating a delay element D, such as to enable the provision of the previously determined output. Of course a lot of other implementations, based on simple memory storage, can be envisaged, thus obviating the need of a dedicated delay element. It is also to be remarked that also the output determined in another previous time step, thus not only that corresponding to the previous video frame T-1, can be used. The delay has to be adapted accordingly in these embodiments.

The embodiment of Fig. 1 further contains another module 300, aimed to apply the optical flow, as determined in module 200, to the morphed standard 3D model, provided by module 100. The basic idea is thus to combine the model-based approach of module 100, which is using a relatively simple 3D model, with more detailed flow-based morphing of module 300, whereby the optical flow itself is derived in module 200. Indeed, when for instance applied to facial modeling, the model-based morphing from module 100 may generally result in somewhat artificial looking faces, which are then further augmented/ corrected with the flow-based morphing of module 300, with the optical flow itself being determined by module 200.

As previously mentioned, the resulting fine tuned morphed 3D standard model is used in a feedback loop for the determination of the optical flow.

The following more detailed embodiments will be described with reference to modeling of facial features. It is known to a person skilled in the art how to use the teachings of this document for application to morphing of other deformable objects in a video, such as e.g. animals etc.

Fig. 2 shows a more detailed embodiment of the standard 3D morphing block 100 of Fig. 1. This module comprises a detection module such as an AAM, being the abbreviation of Active Appearance Model, detection module. However other embodiments exist using other detection models such as the ASM, being the abbreviation of Active Shape Model.

This detection module 110 enables to detect facial features in the video frame at time T, in accordance to a detection model, such as the AAM detection model. AAM models and AAM detection are well known techniques in computer vision for detecting feature points on non-rigid objects. AAM morphing can also be extended to 3D localization in case 3D video is input to the system, and AAM detection modules can detect feature points on other objects than faces as well. The object category on which detection is performed may relate to the trainings phase of the AAM model detection module, which training can have taken place offline or in an earlier training procedure. In the described embodiment, the AAM detection module 110 is thus trained to detect facial feature points such as nose, mouth, eyes, eyebrows and cheeks, of a human face, being a non-rigid object, detected in the 2D video frame. The AAM detection model used within the AAM detection module 110 itself can thus be selected out of a set of models, or can be pre-programmed or trained off line to be generically applicable to all human faces.

In case of e.g. morphing of an animal model such as a cat, the training procedure will then have been adapted to detect other important feature points with respect to the form/potential expressions of this cat. These techniques are also well known to a person skilled in the art

In the example of human face modeling, the AAM detection block 110 will generally comprise detecting rough movements of the human face in the video frame, together or followed by detecting some more detailed facial expressions related to human emotions. The relative or absolute positions of the entire face in the live video frame are denoted as "position" information on fig. 1. This position information will be used to move and or rotate a 3D standard model of a face, denoted "standard 3D model" in module 120 . In addition a limited amount of facial expressions is also detected in module 110, by means of some rough indication of position of nose, eyebrows, mouth etc . This output is denoted "features" in fig. 1, and these are used in a morphing module 130 to adapt corresponding facial features of the position adapted standard model as output by module 120.

The 3D standard model, input to module 120 is also generally available/ selectable from a standard database. Such as standard database can comprise 3D standard models of a human face, and several animals such as cats, dogs species etc. This standard 3D will thus be translated, rotated and/or scaled in accordance with the position information from module 110.

In the case of human face modeling, this position adaptation step will result in the 3D standard model reflecting the same pose as the face in the live video feed. In order to further adapt the 3D model to the correct facial expression of the 2D frame, the detected features from module 110 are applied to the partially adjusted 3D standard model in step 130. This morphing module 130 further uses a particular adaptation model, denoted "morphing model" in Fig. 2, which may comprise instructions of how to adapt facial features on a standard 3D model in response to their provision from the detection module. In case a AAM detection model was used, the morphing model will in general be an AAM morphing model. Similar considerations hold in case other models such as the aforementioned ASM morphing is used.

The result is thus a morphed standard 3D model provided by module 130.

An example implementation of this model-based morphing may comprise repositioning the vertices of the standard model 3D relating to facial features, based on the facial features detection results of the live video feed. The 3D content in between facial features can be further filled by simple linear interpolation or, in case a more complex higher-order AAM morphing model including elasticity of the face is used, higher order interpolation or even other more complex functions are used. How the vertices are displaced and how the data in between is filled in, is all comprised in a morphing model.

It may be remarked that despite the quality of the available (AAM) detection and morphing models, still artificial-looking results may be obtained because the generic applicable detection model is only used to detect the location of the facial features in the live video feed, which are afterwards used to displace the facial features in the 3D position adapted model based on their location in the video feed. Regions between facial features in this 3D standard model are then interpolated using an (AAM) morphing model. The latter has however no or only limited knowledge about how the displacement of each facial feature may possibly affect neighboring facial regions. Some general information about facial expressions and their influence on facial regions, which may relate to elasticity, can be put into this morphing model, but yet this will still result in artificial-looking morphing results, simply because each person is different and not all facial expressions can be covered in one very generic model covering all human faces.

Similar considerations are valid for morphing other deformable objects such as animals detected in video based on 3D standard models.

To further improve the morphed standard 3D model, this artificial-looking morphing model provided by module 100, can be augmented using flow-based morphing in step 300, as was earlier discussed with reference to Fig. 1.

Before performing this flow-based morphing-step the optical flow itself has to be determined. Optical flow is defined here as the displacement or pattern of apparent motion of objects, surfaces and edges in a visual scene from one frame to the other or from a frame to a 2D or 3D model. In the embodiments described here the methods for determining optical flow aim to calculate the motion between two images taken at different instances in time, e.g.T and T-1, at pixel level, or, alternatively aim at calculating the displacement between a pixel at time T and a corresponding voxel in a 3D model at time T or vice versa.

As the optical flow has to be applied in module 300 to the morphed standard 3D model, based on the 2D video frame, the optical flow is to be calculated from this frame to this 3D model. In general however optical flow calculations are performed from a 2D frame to another 2D frame, therefore some extra steps are added to determine the optical flow from a 2D frame to a 3D morphed model. This extra step may involve using a reference 3D input, being the previously determined fine tuned 3D model, e.g. determined at T-1. This information is thus provided from the output of the arrangement to module 200.

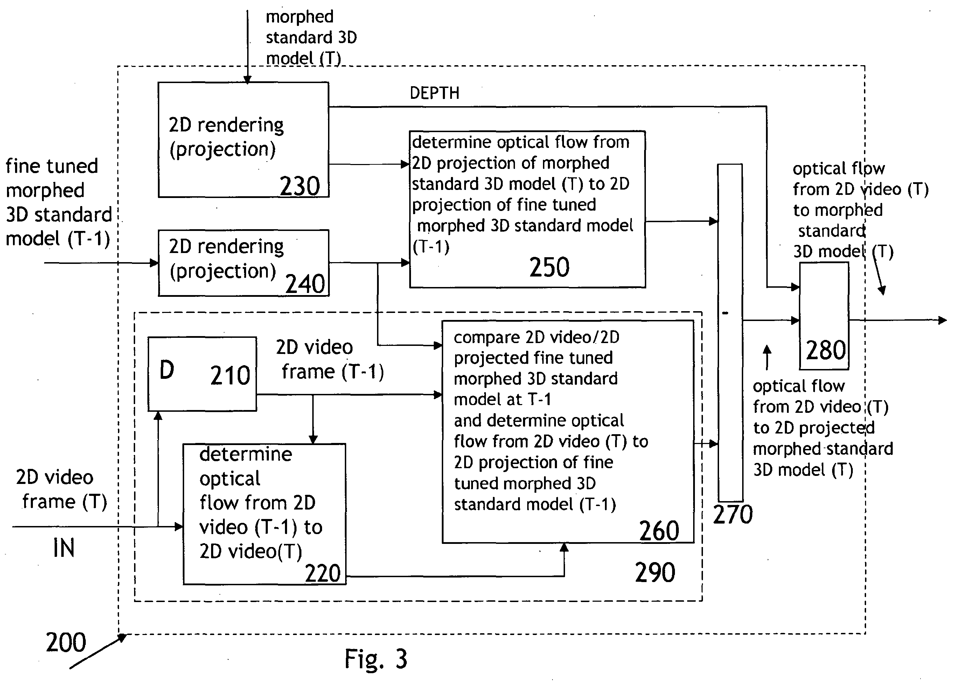

Fig. 3 depicts a detailed embodiment for realizing module 200. In this embodiment a first module 250 is adapted to determine a first optical flow between the 2D projection of the morphed standard 3D model and the 2D projection of the previous fine tuned morphed 3D standard model. A second module 290 is adapted to determine a second optical flow between the actual 2D frame at time T and the 2D projection of the previous fine tuned morphed 3D standard model. A combining module 270 calculates a third optical flow from said first and second optical flow. This third optical flow is the optical flow between the actual 2D frame at time T and the 2D projection of the morphed standard 3D model at time T. Module 280 will then further adapt this third optical flow to obtain the desired optical flow between the 2D image data input at time T and the morphed standard 3D model at time T. Further details will now be described.

In order to determine the first optical flow between the 2D projection of the morphed standard 3D model and the 2D projection of the previous fine tuned morphed 3D standard model, these 2D projections are performed on the respective 3D models provided to module 200. To this purpose module 230 is adapted to perform a 2D rendering or projection on the morphed standard 3D model as provided by module 100, whereas module 240 is adapted to perform a similar 2D projection of the previous fine tuned morphed 3D standard model, in the embodiment of Fig. 3, being the one determined at time T-1. The projection parameters used in these projections are preferably corresponding to the projection parameters of the video camera for recording the 2D video frames. These relate to the calibration parameters of the video camera.

In the embodiment depicted in Fig. 3 module 290 comprises 3 further sub-modules. In module 220 thereof the optical flow between the present video frame a time T and a previous one, in this case being the one at T-1, video is determined. The timing instance for the previous 2D frame is the same as the timing instance for the previous fine tuned morphed 3D standard model.

Therefore the delay element 210 of module 290 introduces a same delay as the one used in the feedback loop of the complete arrangement in fig. 1.Of course again other embodiments are possible for providing this previous value of the 2D video, which can thus also just be stored in an internal memory, alleviating the need of an additional delay block.

The optical flow calculated between successive video frames T and T-1 is thus determined in module 220, and further used in module 260 such as to determine the optical flow from the 2D projection of the 3D fine tuned output at time T-1 to the 2D video frame at T. The projection itself was thus performed in module 240. The projection parameters are such as to map to these used in the 2D camera with which the 2D video frames are recorded.

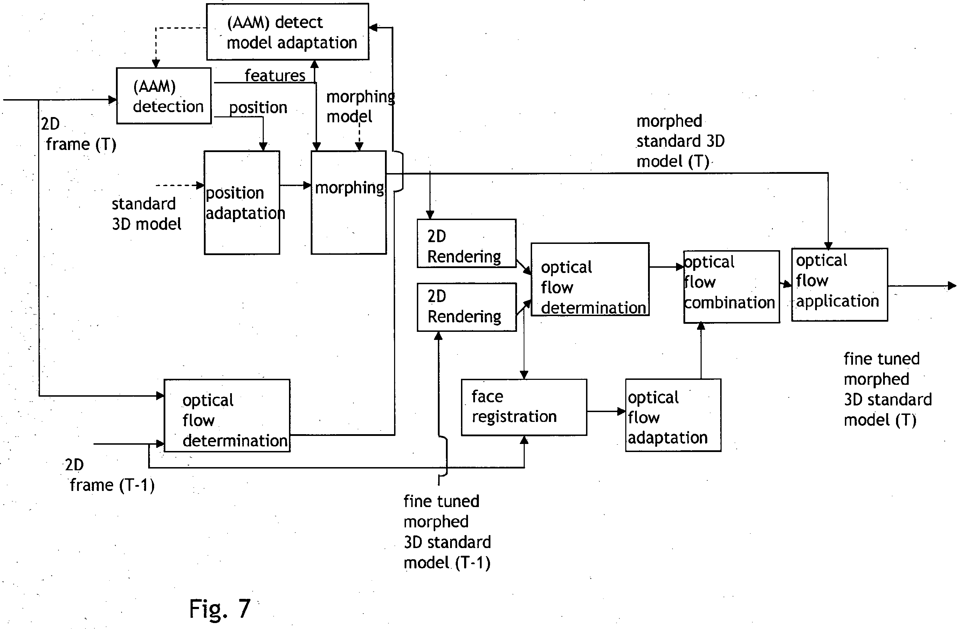

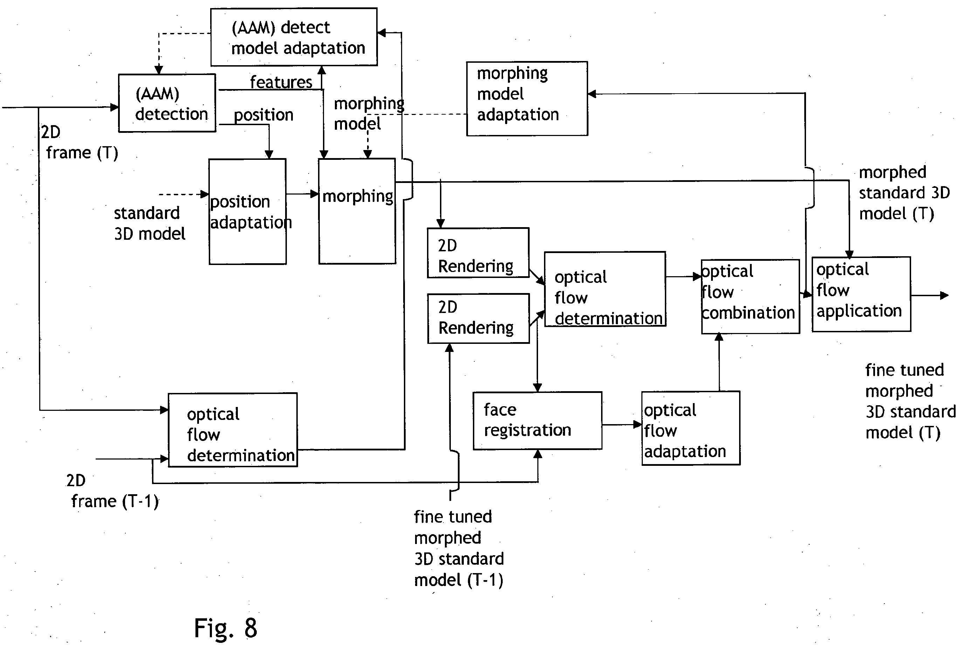

The determination of this second optical flow in step 260 takes into account that the standard model and live video feed can sometimes represent different persons, which anyhow should be aligned. In some embodiments module 260 can comprise two steps: a first face registration step, where the face shape of the live video feed at the previous frame T-1 is mapped to the face shape of the 2D projection of the previous fine tuned morphed 3D content (on time T-1). This registration step can again make use of an AAM detector. Next, the optical flow calculated on the live video feed at time T is aligned, e.g. by means of interpolation to the face shape of the 2D projected 3D content at time T-1. These embodiments are shown more into detail in Figs. 7 and 8.

The first optical flow determined between the 2D projections of the morphed standard model at time T and the previously fine tuned standard model at time T-1, by module 250, is then to be combined with the second optical flow determined in module 260 to result in a third optical flow from the 2D video at time T to the 2D projection of the morphed standard model at time T. This is in 2D the optical flow information which is actually desired. As this combination involves subtracting a intermediate common element, being the 2D projection of the previously determined fine tuned model, this combination is shown by means of a "-" sign in module 270.

However as this determined third optical flow still concerns an optical flow between two images in 2D, an additional step 280 is needed for the conversion of this optical flow from the 2D video frame at time T to the 3D content of the morphed standard 3D model at time T. This may involve back-projecting using the inverse process as used during the 2D projection, thus with the same projection parameters. To this purpose the depth, which resulted from the 2D projection is used, for re-calculating vertices from 2D to 3D.

It is to be remarked that, instead of using successive frames and successively determined fine tuned morphed 3D models, at times T and T-1, the time gaps between a new frame and a previous frame may be longer than the frame delay. In this case a corresponding previously determined output morphed model is to be used, such that the timing difference between an actual frame and a previous frame as used in module 200, corresponds to that between the new to be determined output and the previous output used for determining the optical flow. In an embodiment this can be realized by e.g. using similar delay elements D in the feedback loop of fig. 1 and module 210 of fig. 3.

Module 300 of Fig. 1 then applies the thus calculated optical-flow to the morphed standard 3D model, thereby generating the fine tuned morphed 3D standard model.

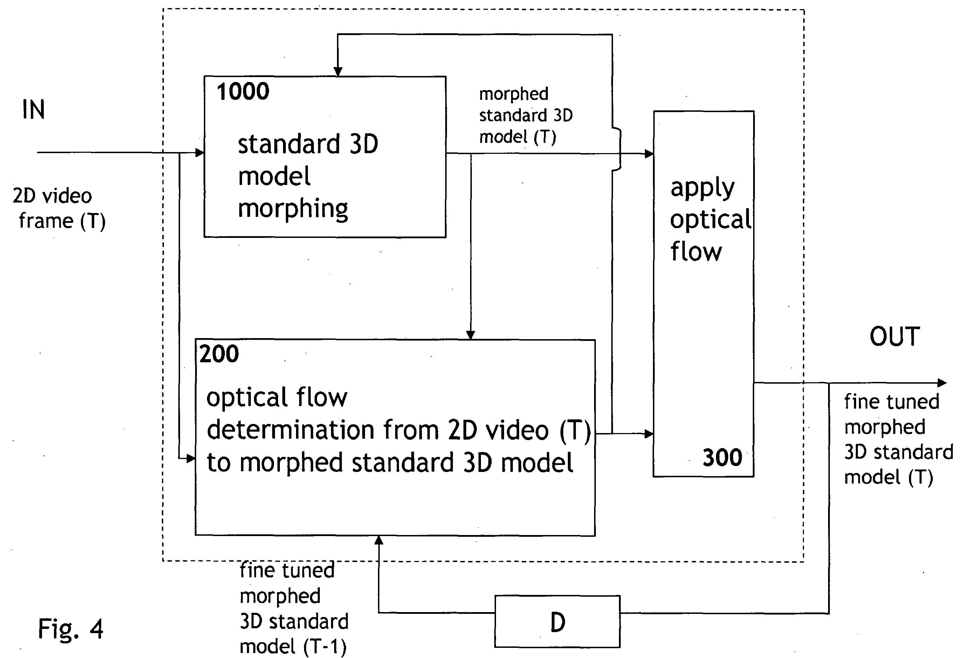

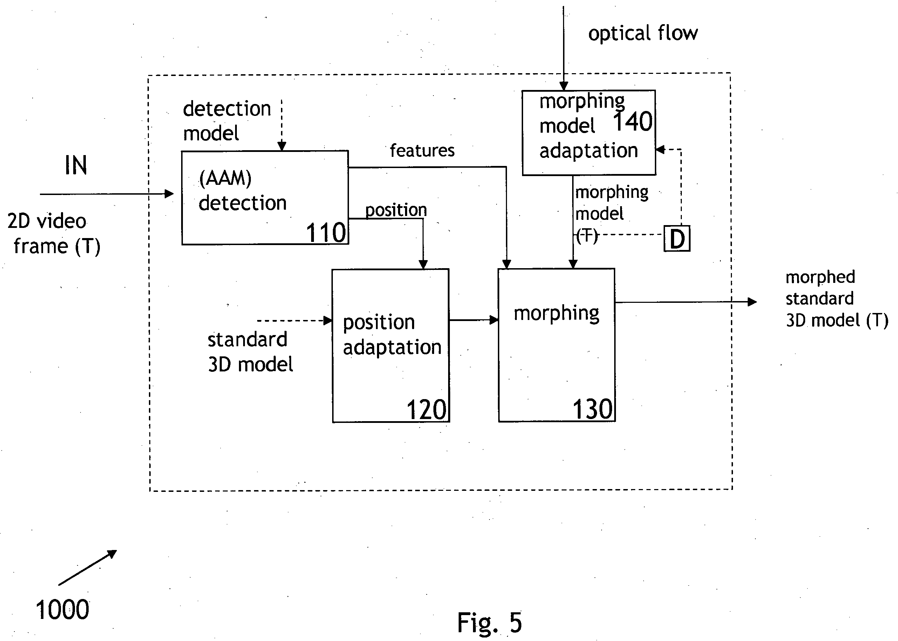

In a first variant embodiment of the arrangement, depicted in fig4, an additional feedback loop is present between the output of module 200, computing the optical flow between the 2D video at time T and the morphed standard 3D model at this time T, to an adapted module 1000 for performing the initial morphing of the standard 3D model. This adapted module 1000 is further shown into detail on Fig. 5. Compared to fig. 2, this module 1000 receives an extra input signal, denoted "optical flow" provided by the output of the optical flow calculating module 200, which information is used for adapting the morphing model used in the morphing module 130 itself. An additional module 140 within the morphing module 1000 thus updates the previous version of the morphing model based on this optical flow information. In the embodiment depicted in Fig. 5 again the use of a delay element is shown, but other embodiments just storing a previous value are as well possible.

This update of the morphing model using optical flow feedback may be useful because a standard generic morphing model has no knowledge about how the displacement of each facial feature affects its neighboring face regions. This is because there is no or not enough notion of elasticity in this basic morphing model. The provision of optical flow information can therefore enable the learning of more complex higher-order morphing models. The idea here is that a perfect morphing model morphs the 3D standard model such that it resembles the live video feed perfectly, in which case the "optical flow combination" block 270 of module 200 would eventually result in no extra optical flow to be applied, and thus be superfluous.

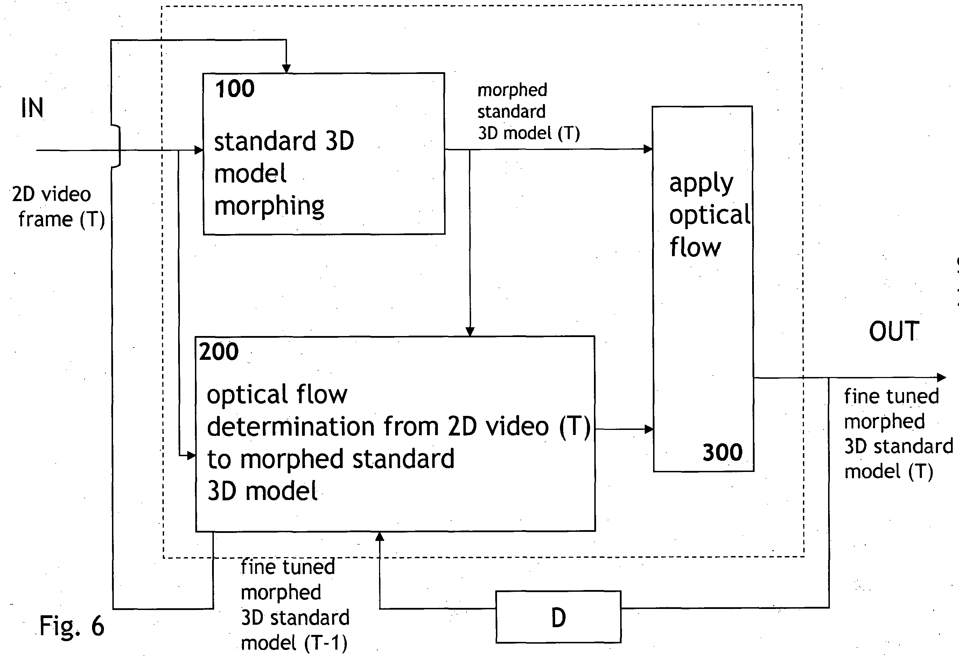

In another variant embodiment, depicted in Fig. 6, yet another feedback loop is present, for feeding back an internal signal from the optical flow calculating module 200, to the standard 3D morphing module 100. Fig. 7 depicts a detailed embodiment in this respect : the feedback is actually provided from the optical flow at the 2D level between the video frames at time T and T-1, to an extra AAM or other detection model adaptation module itself. It can be assumed that the optical flow calculated between frames T-1 and T in the live video feed maps the facial features detected in frame T-1 to the facial features detected in frame T. As it is possible that not all facial expressions as such are covered by this etection model, facial feature detection in the live video feed can sometimes fail. This scenario can be solved by adapting the detection model for detecting the facial features such that it will include this facial expression so that future occurrences are detected and accordingly applied to the 3D standard model.

Fig. 8 shows an embodiment wherein all feedback loops described so far are incorporated.

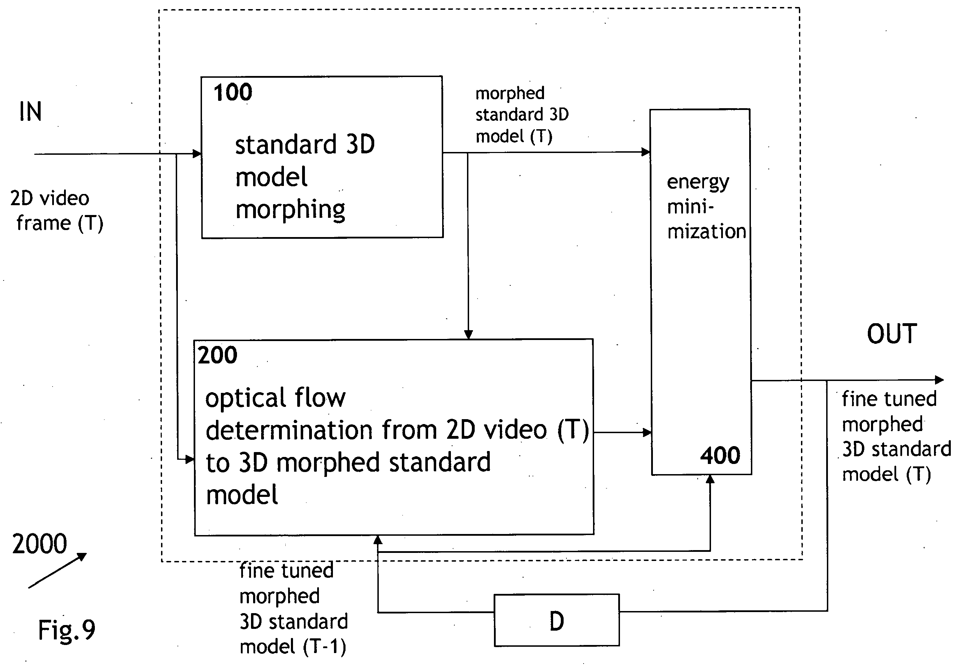

Fig. 9 shows another high level embodiment which implements a more probabilistic approach to the combination of both model-based and flow-based morphing. The model-based module 100 provides accurate displacements of a limited sparse set of feature points of the 3D model, whereas the flow-based module provides less accurate two dimensional displacement estimates, but for a much denser set of points on the model. Combining these different kinds of observations with different accuracies via a probabilistic approach may obtain even more accurate results for the fine tuned morphed 3D standard model. Such a probabilistic approach is realized by means of the energy minimization module 400 of the embodiment of Fig. 9.

In case of face modeling, such a probabilistic approach intuitively allows for an underlying elasticity model of the face to fill in the unobserved gaps. A face can only move in certain ways. There are constraints on the movements. For instance, neighboring points on the model will move in similar ways. Also, symmetric points on the face are correlated. This means that if you see the left part of your face smile, there is a high probability that the right side smiles as well, although this part may be unobserved.

Mathematically this can be formulated as an energy minimization problem, consisting of two data terms and a smoothness term.

$$E = S + D_{FLOW} + D_{MODEL}$$

$D_{FLOW}$ is some distance metric between a proposed candidate solution for the final fine tuned morphed 3D model and what one could expect from seeing the optical flow of the 2D input image alone. The better the proposed candidate matches the probability distribution, given the observed dense optical flow map, the lower this distance. The metric is weighted inversely proportional to the accuracy of the optical flow estimate.

$D_{MODEL}$ is a similar metric, but represents the distance according to the match between the candidate solution and the observed AAM-based morphed 3D model. It is also weighted inversely proportional to the accuracy of the AAM algorithm.

S penalizes improbable motions of the face. It comprises two types of subterms: absolute and relative penalties. Absolute penalties penalize proportional to the improbability of a point of the face moving in the proposed direction, tout court. Relative ones penalize in the same manner, but given the displacement of neighboring points (or other relevant points, e.g. symmetric points).

Energy minimization problems can be solved by numerous techniques. Examples are: gradient descent methods, stochastic methods (simulated annealing, genetic algorithms, random walks), graph cut, belief propagation, Kalman filter, ... The objective is always the same: find the proposed morphed 3D model for which the energy in the above equation is minimal.

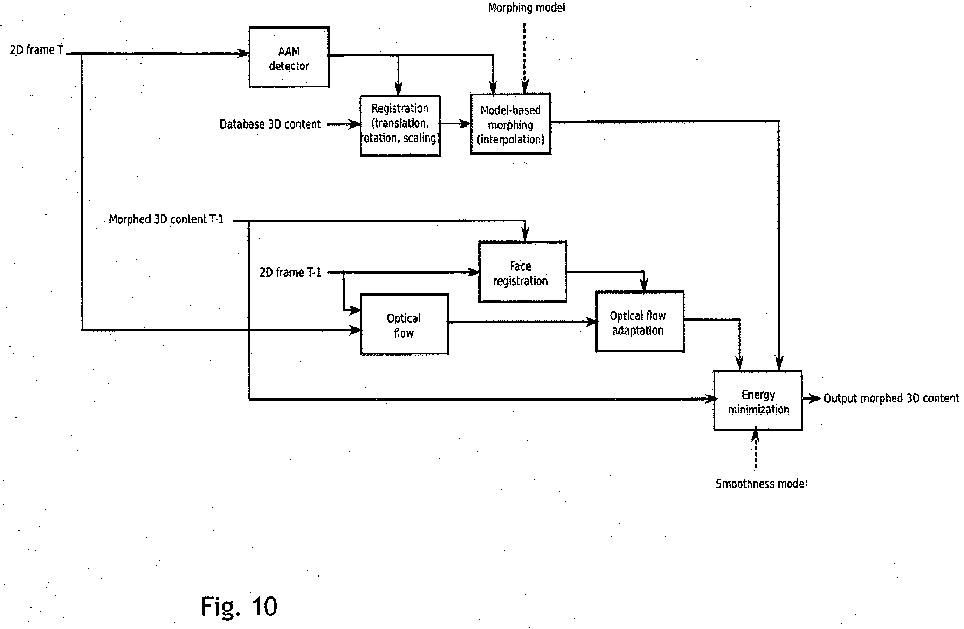

A more detailed embodiment for the embodiment of Fig. 9 is shown in Fig. 10.

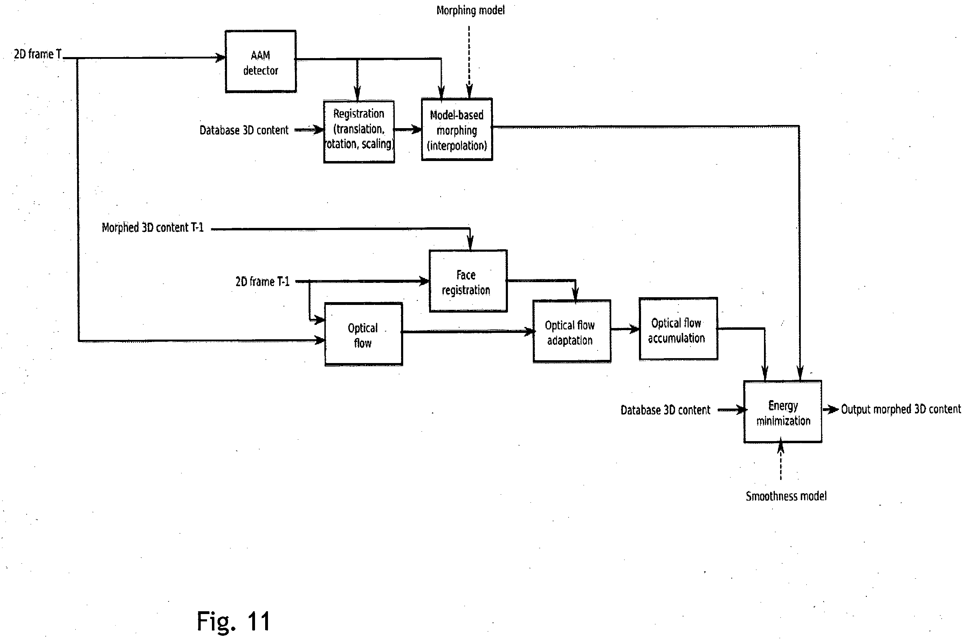

A second probabilistic embodiment", not covered by the claims," is shown in figure 11 . In this embodiment the aligned optical flow is accumulated over time. Combining the accumulated aligned optical flow and AAM detection/morphing result in an energy minimization problem allows for an easy and real-like looking morphing of the 3D database content. The potential drift induced by accumulating the optical flow over time is taken care of by including the AAM morphing results. And artificial looking morphing results are eliminated by including the optical flow morphing results.

Note that all described embodiments are not limited to the morphing of human faces only. Models for any non-rigid object can be built and used for morphing in the model-based approach. In addition the embodiments are not limited to the use of AAM models. Other models like e.g. ASM (Active Shape Models) can be used during the initial morphing module 100.

**Claims**

1. Method for morphing a standard 3D model based on a 2D video frame at a particular instance in time (2D video frame (T)), said method comprising the steps of

   - performing an initial morphing (100) of said standard 3D model using said 2D video frame (2D video frame (T)), a detection model and a morphing model, thereby obtaining a morphed standard 3D model for said 2D video frame at said particular instance in time (T)
   - determining (200) the optical flow between the 2D "video frame (T)" and the morphed standard 3D model,
   - applying (300) the optical flow to said morphed standard 3D model, thereby providing a fine tuned morphed 3D standard model at said particular instance in time (T) wherein determining the optical flow between the 2D video frame (T) and the morphed standard 3D model (T) at said particular instance in time comprises :
   - determining (250) a first optical flow between the 2D projection of the morphed standard 3D model (T) and the 2D projection of a previous fine tuned morphed 3D standard model (T-1) determined on a previous 2D video frame "(T-1),"
   - determining (290) a second optical flow between the actual 2D frame (T) and the 2D projection of the previous fine tuned morphed 3D standard model (T-1) determined on said previous 2D video frame (T-1),
   - combining (270) said first and second optical flow to obtain a third optical flow between the 2D video frame (T) and the 2D projection of the morphed standard 3D model (T),
   - back-projecting (280) said third optical flow based on depth information obtained during the 2D projection of said morphed standard 3D model (T) to obtain the optical flow between the 2D video frame (T) and the morphed standard 3D model (T).

2. Method according to claim 1 further comprising a step of updating (140) the morphing model used in said initial morphing step (1000) based on the optical flow between the 2D "video frame (T)" and the morphed standard 3D model.

**3.** Method according to any of the previous claims 1 to 2 further comprising a step of updating the detection model used in said initial morphing step, based on optical flow information determined between the between the 2D "video frame (T)" and a previous 2D "video frame (T-1)."

**4.** Method according to any of the previous claims 1 to 3 wherein said step of applying the optical flow comprises an energy minimization procedure (400).

**5.** Arrangement for morphing a standard 3D model based on a 2D video frame at a particular instance in time (2D video frame (T)), said arrangement being adapted to

- perform an initial morphing (100) of said standard 3D model using said 2d video frame (2D video frame (T)), a detection model and a morphing model, thereby obtaining a morphed standard 3D model for said 2D video frame at said particular instance in time (T),
- determine (200) the optical flow between the 2D "video frame (T)" and the morphed standard 3D model,
- apply (300) the optical flow to said morphed standard 3D model, thereby providing a fine tuned morphed 3D standard model to an output of said arrangement whereby said arrangement is further adapted to determine the optical flow between the 2D video frame (T) and the morphed standard 3D model (T) at said particular instance in time by:
- determining (250) a first optical flow between the 2D projection of the morphed standard 3D model (T) and the 2D projection of a previous fine tuned morphed 3D standard model (T-1) determined on a previous 2D video frame,
- determining (290) a second optical flow between the actual 2D video frame (T) and the 2D projection of a previous fine tuned morphed 3D standard model (T-1) determined on said previous 2D video frame (T-1),
- combining (270) said first and second optical flow to obtain a third optical flow between the actual 2D video frame (T) and the 2D projection of the morphed standard 3D model (T),
- back-projecting (280) said third optical flow based on depth information obtained during the 2D projection of said morphed standard 3D model (T) to obtain the optical flow between the 2D video frame (T) and the morphed standard 3D model (T) .

**6.** Arrangement according to claim 5 further being enabled to update (140) the morphing model used in said initial morphing step (1000) based on the optical flow between the 2D "video frame (T)" and the morphed standard 3D model.

**7.** Arrangement according to any of the previous claims 5 to 6 further being enabled to update the detection model used in said initial morphing step, based on optical flow information determined between the between the 2D "video frame (T)" and a previous 2D "video frame (T-1)".

**8.** Image processing apparatus comprising an arrangement as set out in any of the previous claims 5 to 7.

**9.** A computer program product comprising software adapted to perform the method steps in accordance to any of the claims 1 to 4, when executed on a data-processing apparatus

**Patentansprüche**

**1.** Verfahren zum Morphing eines Standard-3D-Modells auf der Grundlage eines 2D-Videobilds in einem konkreten Zeitfenster (2D-Videobild (T)), wobei besagtes Verfahren die folgenden Schritte umfasst:

- Durchführung eines ersten Morphings (100) besagten Standard-3D-Modells unter Verwendung besagten 2D-Videobilds (2D Videobild (T)), eines Ausgangsmodells und eines Morphingmodells, dadurch gemorphtes Standard-3D-Modell für besagtes 2D-Videobild in besagtem konkretem Zeitfenster (T) erhaltend.
- Bestimmen (200) des optischen Flusses zwischen dem 2D-Videobild (T) und dem gemorphten Standard-3D-Modell,
- Anwenden (300) des optischen Flusses auf besagtes gemorphtes Standard-3D-Modell, dabei ein feinabgestimmtes gemorphtes 3D-Standardmodell in besagtem konkretem Zeitfenster (T) zur Verfügung stellend, wobei das Bestimmen des optischen Flusses zwischen dem 2D-Videobild (T) und dem gemorphten Standard-3D-Modell (T) in besagtem konkretem Zeitfenster umfasst:
- Bestimmen (250) eines ersten optischen Flusses zwischen der 2D-Projektion des gemorphten Standard-3D-Modells (T) und der 2D-Projektion eines zuvor feinabgestimmten gemorphten 3D-Standardmodells (T-1), das auf einem vorangehenden 2D-Videobild (T-1) bestimmt wurde,
- Bestimmen (290) eines zweiten optischen Flusses zwischen dem gegenwärtigen 2D-Bild (T) und der 2D-Projektion des vorhergehenden, feinabgestimmten gemorphten 3D-Standardmodells (T-1), das auf besagtem vorangehendem 2D-Videobild (T-1) bestimmt wurde,
- Kombinieren (270) besagten ersten und zweiten optischen Flusses zum Zweck des Erhalts eines dritten optischen Flusses zwischen dem 2D-Videobild (T) und der 2D-Projektion des gemorphten Standard-3D-Modells (T),
- Rückprojektion (280) besagten dritten optischen Flusses auf der Grundlage von Tiefeninformationen, die während der 2D-Projektion besagten gemorphten Standard-3D-Modells (T) gewonnen wurden, um den optischen Fluss zwischen dem 2D-Videobild (T) und dem gemorphten Standard-3D-Modell (T) zu ermitteln.

**2.** Verfahren nach Anspruch 1, weiterhin einen Schritt des Aktualisierens (140) des bei besagtem erstem Morphingschritt (1000) verwendeten Morphingmodells auf der Grundlage des optischen Flusses zwischen dem 2D-Videobild (T) und dem gemorphten Standard-3D-Modell umfassend.

**3.** Verfahren nach einem beliebigen der Ansprüche 1 bis 2, weiterhin einen Schritt des Aktualisierens des im ersten Morphingschritt verwendeten Ausgangsmodells auf der Grundlage der bestimmten Informationen zum optischen Fluss zwischen dem 2D-Videobild (T) und einem vorhergehenden 2D-Videobild (T-1) umfassend.

**4.** Verfahren nach einem beliebigen der Ansprüche 1 bis 3, wobei besagter Schritt des Anwendens des optischen Flusses ein Verfahren zur Energieminimierung (400) umfasst.

**5.** Anordnung zum Morphing eines Standard-3D-Modells auf der Grundlage eines 2D-Videobilds in einem konkreten Zeitfenster (2D-Videobild (T)), wobei besagte Anordnung ausgelegt ist für:

- Durchführung eines ersten Morphings (100) besagten Standard-3D-Modells unter Verwendung besagten 2D-Videobilds (2D Videobild (T)), eines Ausgangsmodells und eines Morphingmodells, dadurch gemorphtes Standard-3D-Modell für besagtes 2D-Videobild in besagtem konkretem Zeitfenster (T) erhaltend.
- Bestimmen (200) des optischen Flusses zwischen dem 2D-Videobild (T) und dem gemorphten Standard-3D-Modell,
- Anwenden (300) des optischen Flusses auf besagtes gemorphtes Standard-3D-Modell, dabei ein feinabgestimmtes gemorphtes 3D-Standardmodell für eine Ausgabe besagter Anordnung zur Verfügung stellend, wobei besagte Anordnung weiterhin ausgelegt, um den optischen Fluss zwischen dem 2D-Videobild (T) und dem gemorphten Standard-3D-Modell (T) in besagtem konkretem Zeitfenster durch folgende Schritte zu bestimmen:
- Bestimmen (250) eines ersten optischen Flusses zwischen der 2D-Projektion des gemorphten Standard-3D-Modells (T) und der 2D-Projektion eines zuvor feinabgestimmten gemorphten 3D-Standardmodells (T-1), das auf einem vorangehenden 2D-Videobild bestimmt wurde,
- Bestimmen (290) eines zweiten optischen Flusses zwischen dem gegenwärtigen 2D-Videobild (T) und der 2D-Projektion eines vorhergehenden, feinabgestimmten gemorphten 3D-Standardmodells (T-1), das auf besagtem vorangehendem 2D-Videobild (T-1) bestimmt wurde,
- Kombinieren (270) besagten ersten und zweiten optischen Flusses zum Zweck des Erhalts eines dritten optischen Flusses zwischen dem aktuellen 2D-Videobild (T) und der 2D-Projektion des gemorphten Standard-3D-Modells (T),
- Rückprojektion (280) besagten dritten optischen Flusses auf der Grundlage von Tiefeninformationen, die während der 2D-Projektion besagten gemorphten Standard-3D-Modells (T) gewonnen wurden, um den optischen Fluss zwischen dem 2D-Videobild (T) und dem gemorphten Standard-3D-Modell (T) zu ermitteln.

**6.** Anordnung nach Anspruch 5, weiterhin ausgelegt für das Aktualisieren (140) des bei besagtem erstem Morphingschritt (1000) verwendeten Morphingmodells auf der Grundlage des optischen Flusses zwischen dem 2D-Videobild (T) und dem gemorphten Standard-3D-Modell.

**7.** Anordnung nach einem beliebigen der Ansprüche 5 bis 6, weiterhin ausgelegt für das Aktualisieren des im ersten Morphingschritt verwendeten Ausgangsmodells auf der Grundlage der bestimmten Informationen zum optischen Fluss zwischen dem 2D-Videobild (T) und einem vorhergehenden Videobild (T-1).

**8.** Bildverarbeitungsvorrichtung, eine Anordnung nach einem beliebigen der vorgenannten Ansprüche 5 bis 7 umfassend.

**9.** Computerprogrammprodukt, eine Software umfassend, die ausgelegt ist für die Durchführung der Verfahrensschritte nach einem jeglichen der Ansprüche 1 bis 4, wenn es auf einer Datenverarbeitungsvorrichtung ausgeführt wird.

## Revendications

**1.** Procédé de morphage d'un modèle 3D standard sur la base d'une trame vidéo 2D à un instant particulier (trame vidéo (T) 2D), ledit procédé comprenant les étapes suivantes

- exécuter un morphage initial (100) dudit modèle 3D standard en utilisant ladite trame vidéo 2D (trame vidéo (T) 2D), un modèle de détection et un modèle de morphage, obtenant ainsi un modèle 3D standard de morphage pour ladite trame vidéo 2D audit instant (T) particulier

- déterminer (200) le flux optique entre la trame vidéo (T) 2D et le modèle 3D standard de morphage,

- appliquer (300) le flux optique audit modèle 3D standard de morphage, fournissant ainsi un modèle standard 3D de morphage réglé avec précision audit instant (T) particulier dans lequel la détermination du flux optique entre la trame vidéo (T) 2D et le modèle 3D standard de morphage (T) audit instant particulier comprend les étapes suivantes :

- déterminer (250) un premier flux optique entre la projection 2D du modèle 3D standard de morphage (T) et la projection 2D d'un modèle standard 3D de morphage réglé avec précision précédent (T-1) déterminé sur une trame vidéo (T-1) 2D précédente,

- déterminer (290) un deuxième flux optique entre la trame (T) 2D réelle et la projection 2D du modèle standard 3D de morphage réglé avec précision précédent (T-1) déterminé sur ladite trame vidéo (T-1) 2D précédente,

- combiner (270) lesdits premier et deuxième flux optiques pour obtenir un troisième flux optique entre la trame vidéo (T) 2D et la projection 2D du modèle 3D standard de morphage (T),

- rétroprojeter (280) ledit troisième flux optique sur la base d'informations de profondeur obtenues durant la projection 2D dudit modèle 3D standard de morphage (T) pour obtenir le flux optique entre la trame vidéo (T) 2D et le modèle 3D standard de morphage (T).

2.  Procédé selon la revendication 1 comprenant en outre une étape de mise à jour (140) du modèle de morphage utilisé dans ladite étape de morphage initial (1 000) sur la base du flux optique entre la trame vidéo (T) 2D et le modèle 3D standard de morphage.

3.  Procédé selon l'une quelconque des revendications précédentes 1 et 2 comprenant en outre une étape de mise à jour du modèle de détection utilisé dans ladite étape de morphage initial, sur la base d'informations de flux optique déterminées entre la trame vidéo (T) 2D et une trame vidéo (T-1) 2D précédente.

4.  Procédé selon l'une quelconque des revendications 1 à 3 dans lequel ladite étape d'application du flux optique comprend une procédure d'économie d'énergie (400).

5.  Agencement de morphage d'un modèle 3D standard sur la base d'une trame vidéo 2D à un instant particulier (trame vidéo (T) 2D), ledit agencement étant adapté pour

- exécuter un morphage initial (100) dudit modèle 3D standard en utilisant ladite trame vidéo 2D (trame vidéo (T) 2D), un modèle de détection et un modèle de morphage, obtenant ainsi un modèle 3D standard de morphage pour ladite trame vidéo 2D audit instant (T) particulier,

- déterminer (200) le flux optique entre la trame vidéo (T) 2D et le modèle 3D standard de morphage,

- appliquer (300) le flux optique audit modèle 3D standard de morphage, fournissant ainsi un modèle standard 3D de morphage réglé avec précision à une sortie dudit agencement, ledit agencement étant en outre adapté pour déterminer le flux optique entre la trame vidéo (T) 2D et le modèle 3D standard de morphage (T) audit instant particulier :

- en déterminant (250) un premier flux optique entre la projection 2D du modèle 3D standard de morphage (T) et la projection 2D d'un modèle standard 3D de morphage réglé avec précision précédent (T-1) déterminé sur une trame vidéo 2D précédente,

- en déterminant (290) un deuxième flux optique entre la trame vidéo 2D réelle (T) et la projection 2D d'un modèle standard 3D de morphage réglé avec précision précédent (T-1) déterminé sur ladite trame vidéo 2D précédente (T-1),

- en combinant (270) lesdits premier et deuxième flux optiques pour obtenir un troisième flux optique entre la trame vidéo 2D réelle (T) et la projection 2D du modèle 3D standard de morphage (T),

- en rétroprojetant (280) ledit troisième flux optique sur la base d'informations de profondeur obtenues durant la projection 2D dudit modèle 3D standard de morphage (T) pour obtenir le flux optique entre la trame vidéo (T) 2D et le modèle 3D standard de morphage (T).

6.  Agencement selon la revendication 5 permettant en outre de mettre à jour (140) le modèle de morphage utilisé dans ladite étape de morphage initial (1 000) sur la base du flux optique entre la trame vidéo (T) 2D et le modèle 3D standard de morphage.

7.  Agencement selon l'une quelconque des revendications précédentes 5 et 6 permettant en outre de mettre à jour le modèle de détection utilisé dans ladite étape de morphage initial, sur la base d'informations de flux optique déterminées entre la trame vidéo (T) 2D et une trame vidéo (T-1) 2D.

8.  Appareil de traitement d'images comprenant un agencement selon l'une quelconque des revendications précédentes 5 à 7.

9. Produit de programme informatique comprenant un logiciel adapté pour exécuter les étapes du procédé selon l'une quelconque des revendications 1 à 4, lorsqu'il est exécuté sur un appareil de traitement de données.

Fig. 1

EP 2 615 583 B1

Fig. 2

EP 2 615 583 B1

Fig. 3

Fig. 4

optical flow

detection
model

IN

2D video
frame (T)

(AAM)
detection          110

features

position

morphing
model     140
adaptation

morphing
model
(T)                    D

standard
3D model

position
adaptation      120

morphing      130

morphed
standard
3D model (T)

1000

Fig. 5

EP 2 615 583 B1

Fig. 6

IN

2D video frame (T)

**100**

standard 3D model morphing

morphed standard 3D model (T)

**200**

optical flow determination from 2D video (T) to morphed standard 3D model

apply optical flow

**300**

OUT

fine tuned morphed 3D standard model (T)

fine tuned morphed 3D standard model (T-1)

D

EP 2 615 583 B1

16

Fig. 7

EP 2 615 583 B1

(AAM) detect
model adaptation

morphing
model
adaptation

features

(AAM)
detection

morphing
model

position

2D
frame (T)

standard
3D model

position
adaptation

morphing

morphed
standard 3D
model (T)

2D
Rendering

optical
flow
determination

optical
flow
combination

optical
flow
application

2D
Rendering

optical
flow
determination

fine tuned
morphed
3D standard
model (T)

face
registration

optical
flow
adaptation

2D
frame (T-1)

fine tuned
morphed
3D standard
model (T-1)

Fig. 8

Fig.9

EP 2 615 583 B1

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070091085 A